# EUROPEAN PATENT APPLICATION

(11) **EP 4 641 253 A1**
(43) Date of publication of application: **29.10.2025**
(21) Application number: 24305627.2
(22) Date of filing: 23.04.2024
(51) Int. Cl.: G01S 13/42, G01S 13/87, G01S 13/00, G01S 13/34, G01S 13/931, G01S 7/41

(54) **OBJECT QUANTITY ESTIMATION TECHNIQUES IN MIMO RADAR SYSTEMS**

(71) Applicant: NXP B.V., 5656 AG Eindhoven (NL)
(72) Inventor: Surico, Leonardo, 5656 AG Eindhoven (NL); Alcalde, Carlos Alberto, 31023 Toulouse Cedex 1 (FR)
(74) Representative: Schmütz, Christian Klaus Johannes

(57) **Abstract**

Devices and methods for object quantity estimation in a radar system include receiving a plurality of radar echoes at a plurality of reception antennas of the radar system. The plurality of radar echoes correspond to radar signals transmitted from multiple transmission antennas of the radar system. A radar processor of the radar system generates a matrix based on the plurality of radar echoes and estimates the number of objects based on computing a rank of the matrix.

## Description

### BACKGROUND

Some radar systems, such as those used in vehicles with Advanced Driver Assistance System (ADAS) or Autonomous Driving (AD) capabilities, rely on multiple-input multiple-output (MIMO) radar where multiple transmission (TX) antennas are used to create a larger virtual array of reception (RX) antennas to increase the angular resolution of the radar system. For example, a MIMO radar system having an antenna array with four TX antennas and four RX antennas can realize a virtual array with up to sixteen virtual RX antennas since each RX antenna receives a radar echo (or "echo" for purposes of brevity) of a signal transmitted from each TX antenna. The radar system then processes these echoes to detect objects in the surrounding environment and to determine information about the objects such as their range, velocity, and angular direction.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIGs. 1 and 2 show examples of a radar front end and a radar master controller processing unit, respectively, in a radar system configured to implement the MIMO object quantity estimation techniques in accordance with various embodiments.
FIG. 3 shows an example of a vehicular control system including a radar system, such as the radar system of FIGs. 1 and 2, in accordance with various embodiments.
FIG. 4 shows an example of a MIMO antenna array configuration in a radar system, such as the radar system of FIG. 1, in accordance with various embodiments.
FIG. 5 shows an example diagram illustrating a complex beam vector based on echoes received at the MIMO antenna array configuration of FIG. 4 in accordance with various embodiments.
FIG. 6 shows an example of the complex beam vector shown in FIG. 5 grouped by RX antenna in accordance with various embodiments.
FIG. 7 shows an example of a matrix based on the plurality of radar echoes of FIGs. 5 and 6 in accordance with various embodiments.
FIG. 8 shows an example of a neural network (NN) for estimating a rank of the matrix, such as the matrix of FIG. 7, in accordance with various embodiments.
FIG. 9 shows an example of a flowchart of an object quantity estimation method in accordance with various embodiments.
FIG. 10 shows an example of a radar processor with a vector generator, a matrix generator, and a rank estimator in accordance with various embodiments.

### DETAILED DESCRIPTION

A MIMO radar system realizes virtual arrays that are constructed by copies of the physical receive channels between the multiple TX antennas and the multiple RX antennas of the MIMO radar system. The MIMO radar system processes the received echoes associated with these physical receive channels to produce range-Doppler data in the form of a grid of range-Doppler detection cells. In automotive MIMO radar systems, due to the size of the array apertures, there is often more than one direction of arrival at a given range-Doppler detection cell. In some cases, this can complicate downstream radar processing and potentially decrease the detection accuracy. Conventional automotive radar methods utilize angle finding algorithms after calibrating the antenna array to determine the number of spatial frequencies in the collection of complex voltages received at the RX antennas. This information is then used to estimate which range-Doppler detection cells contain at least one detected object to select these cells for further radar processing. However, these conventional methods are relatively complex, exhibit poor performance, and need to be tailored to the specific antenna array configuration of the radar system.

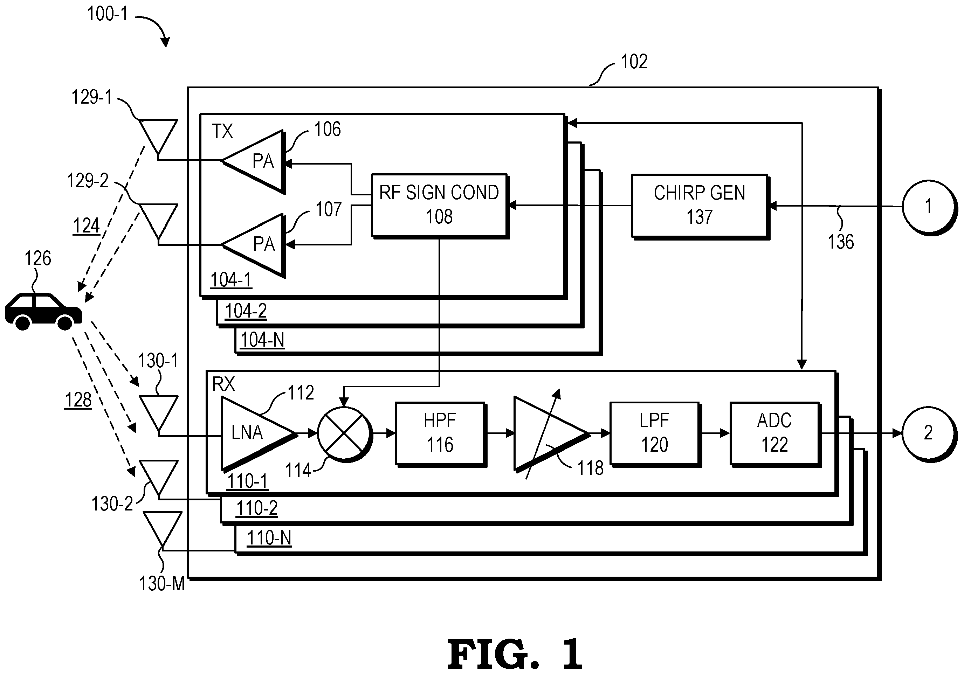

FIGs. 1-10 provide devices and techniques to estimate the number of detected objects without relying on angle finding algorithms or antenna array calibration by utilizing the collection of echoes received at each RX antenna to generate a matrix. By determining the rank of the generated matrix, the devices and techniques estimate the number of detected objects which can then be used to select particular range-Doppler cells for additional radar processing. This approach is simpler and exhibits better performance than conventional methods. In addition, this approach is not dependent on the particular configuration of the antenna array.

To illustrate, in some embodiments, a radar system includes multiple TX antennas and multiple RX antennas. The radar system transmits a radar signal from each one of the multiple TX antennas and receives a plurality of echoes of the transmitted radar signals at each one of the multiple RX antennas. A radar processor in the radar system utilizes the plurality of echoes received at each RX antenna to generate a corresponding receive vector (or array). In some embodiments, each receive vector corresponds to the physical receive channels between the multiple TX antennas and the multiple RX antennas. For example, in some cases, the receive vector represents the echoes received at each one of the multiple RX antennas. The radar processor then generates a matrix based on all of the receive vectors of the multiple RX antennas. For example, each row of the matrix corresponds to a receive vector of one of the multiple RX antennas. The radar processor then computes a rank of the matrix and estimates the number of detected objects based on the computed rank of the matrix. For example, for cases where there is a single object, the receive vectors of the multiple RX antennas will be highly correlated, and the computed rank of the matrix will be one, thereby corresponding to a single object. In some embodiments, the radar processor includes a neural network (NN) accelerator that is trained *a priori* to receive the values of the matrix and generate an output corresponding to the rank of the matrix.

In some embodiments, any of the elements, components, or blocks shown in the ensuing figures are implemented as one of software executing on a processor, hardware that is hard-wired (e.g., circuitry) to perform the various operations described herein, or a combination thereof. For example, one or more of the described blocks or components (e.g., blocks or components associated with the object quantity estimation techniques described herein) represent software instructions that are executed by hardware such as a digital signal processor, an application-specific integrated circuit (ASIC), a set of logic gates, a field programmable gate array (FPGA), programmable logic device (PLD), a hardware accelerator, a parallel processor, neural network (NN) or artificial intelligence (AI) accelerator, or any other type of hardcoded or programmable circuit.

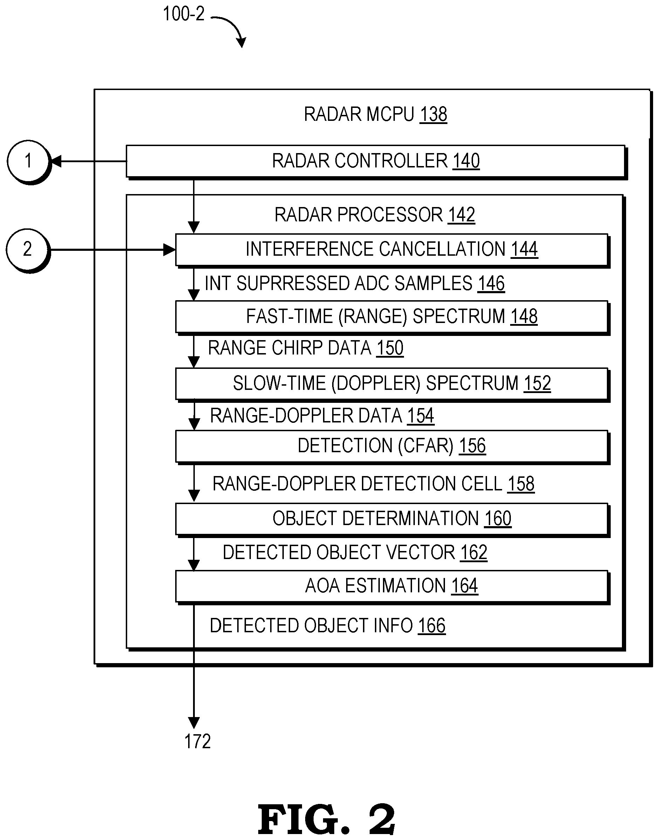

FIGs. 1 and 2 show an example of a radar system 100 (including a first radar system portion 100-1 of FIG. 1 and a second radar system portion 100-2 of FIG. 2) that implements object quantity estimation techniques described herein. FIG. 1 shows a radar front end 102 of the radar system 100 and FIG. 2 shows a radar master controller processing unit (MCPU) 138 of the radar system 100.

Referring to FIG. 1, in some embodiments, the radar front end 102 includes multiple transmitters 104-1 to 104-N (collectively referred to as transmitters 104). In some embodiments, each transmitter 104 includes a plurality of power amplifiers (PAs) 106, 107 and a radio frequency (RF) conditioning (cond.) component 108. The PAs 106, 107 convert a lower power RF signal into a higher power RF signal prior to transmission. For example, in some embodiments, the PAs 106, 107 are configured to convert a lower power RF signal including a plurality of chirps into a higher power RF signal. The RF conditioning component 108 includes hardware and/or software for modifying (i.e., conditioning) the signal received from the chirp generator 137 prior to providing it to the PA 106. For example, in some embodiments, the RF conditioning component 108 includes one or more filters that filter the RF signals prior to signal power amplification at PAs 106, 107, one or more phase modulators that modulate a phase of the signal prior to signal power amplification at one of PAs 106, 107, or the like.

In some embodiments, the radar front end 102 receives program, control trigger, and reference clock signals 136 that are utilized for chirp generation at a chirp generator 137 or received signal processing in the receivers 110. For example, the reference clock signal is a local oscillator (LO) signal, and the control trigger is a chirp start trigger signal that are input to the chirp generator 137 to generate radar chirp sequences that are further processed (e.g., by RF conditioning component 108 and PAs 106, 107) before being transmitted by the transmission antennas 129 of the radar front end 102. In some embodiments, the chirp generator 137 includes a phase locked loop (PLL) that generates linear frequency modulated chirp sequences. For example, the PLL in the chirp generator 137 generates a chirp sequence for transmission by the transmitters 104.

The radar front end 102 also includes transmission antennas 129. In some embodiments, each transmitter 104 is configured with its own transmission antennas 129 (e.g., transmitter 104-1 with transmission antennas 129-1, 129-2). Transmitters 104 send transmitted signals 124 toward one or more objects 126. The transmitted signals are reflected from each object 126, and the object reflected signals 128 (also referred to as object radar signals, radar reflections, echoes, or the like) are directed back to the radar system 100. The object reflected signals 128 are received by reception antennas 130-1 to 130-M. In some embodiments, each receiver 110 is configured with its own reception antenna 130 (e.g., receiver 110-1 with reception antenna 130-1, receiver 110-2 with reception antenna 130-2, receiver 110-M with reception antenna 130-M).

As indicated earlier, the radar front end 102 also includes multiple receivers 110-1 to 110-M (collectively referred to as receivers 110). One or more of the receivers 110 includes a low noise amplifier (LNA) 112, a deramp mixer 114 , a high pass filter (HPF) 116, a variable gain power amplifier 118, a low pass filter (LPF) 120, and an analog-to-digital converter (ADC) 122 that digitizes the received radar signal prior to providing it to a radar signal processor for estimating a range and velocity of the one or more objects 126.

Referring now to FIG. 2, in some embodiments, the radar system 100 includes a radar master controller processing unit (MCPU) 138. In some embodiments, the radar MCPU 138 includes a radar controller 140 and a radar processor 142. The radar controller 140 provides the program, control trigger, and reference clock signals 136 as described above. The radar processor 142 receives the digitized signals from the radar front end 102, e.g., from the ADCs 122 of the receivers 110. In some embodiments, the radar processor 142 includes an interference cancellation component 144, which provides the interference suppressed ADC samples 146. A fast-time (Range) spectrum component 148 receives and processes the interference suppressed ADC samples 146. For example, the fast-time spectrum component 148 applies a Fast Fourier Transform (FFT) over the fast-time index of the windowed samples to provide range chirp data 150 indicative of chirp reflections received at the reception antennas 130. In some embodiments, the range chirp data 150 is cubed with an x-axis and a y-axis made up of fast time data and a z-axis representing data for each of the reception antennas 130. The range chirp data 150 is received and processed by a slow-time (velocity, or Doppler) spectrum component 152. For example, the slow-time spectrum component 152 applies an FFT over the slow-time index of the windowed samples. In this manner, the slow time spectrum component 152 provides range-Doppler data 154 that is cubed with x-axis and y-axis made up of slow time data and a z-axis representing data for each of the reception antennas 130. In some embodiments, the range Doppler data 154 is received and processed by a constant false alarm rate (CFAR) detection component 154. The detection component 154 provides range-Doppler detection cell data 158. An object determination component 160 receives and processes the range-Doppler detection cell data 158 to output a detected object vector 162. The detected object vector 162 is received and processed by a target Angle of Arrival (AoA) estimation component r. The AoA estimation component 164 provides the detected object information 166 attributed to the one or more objects 126 detected by radar system 100 to other components 172. For example, the other components 172 include software modules executed by a processor or a controller to implement advanced driver assistant system (ADAS) or autonomous driving (AD) perception and vehicular control systems.

In some embodiments, the radar system 100, including the radar front end 102 and the radar MCPU 138 are configured to implement the object quantity estimation techniques described herein. For example, the object determination component 160 includes hardware, software, or a combination thereof that are configured to generate, for each reception antenna (or RX antenna) 130 of the radar system 100, a receive vector indicative of the plurality of echoes 128 received based on the radar signals 124 transmitted from the multiple transmit antennas 129. The object determination component 160 is also configured to generate a matrix whose values are based on the receive vectors associated with each reception antenna 130. For example, the receive vector of each reception antenna 130 is a row or a column of the matrix. Additionally, the object determination component 160 is configured to compute or estimate a rank of the generated matrix and estimates the number of objects in the vector 162 based on the computed rank of the matrix. For example, in some embodiments, the object determination component 160 includes a neural network (NN) accelerator or processor that employs a NN to output the rank of the matrix based on an input that includes the values of the matrix. Therefore, the object determination component 160 is able to estimate the number of detected objects without relying on more complex and less precise angle finding algorithms or antenna array calibration methods employed by conventional systems.

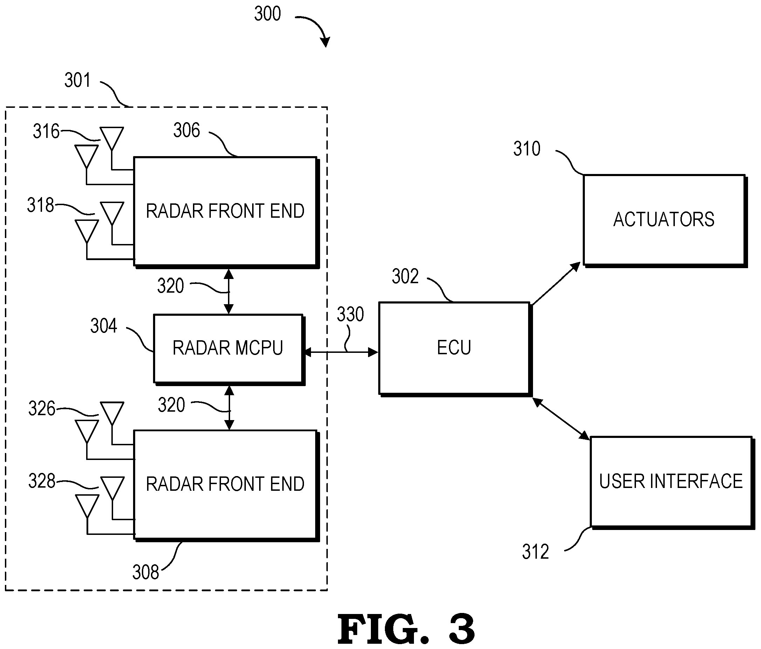

FIG. 3 shows an example of a vehicular control system 300 in accordance with some embodiments. The vehicular control system 300 is implemented, for example, in an automobile and may be used to assist in driver-assistance or autonomous driving functions. As illustrated, the vehicular control system 300 includes a radar system 301 which includes radar front ends 306, 308 and a radar MCPU 304. In some embodiments, radar front ends 306, 308 correspond to radar front end 102 in FIG. 1 and radar MCPU 304 corresponds to radar MCPU 138 in FIG. 2.

In some embodiments, the vehicular control system 300 includes an electronic control unit (ECU) 302. The ECU 302 includes processing circuitry, e.g., a central processing unit (CPU), to perform various processing functions related to vehicular control. The radar MCPU 304 is coupled to radar front ends 306, 308 via interfaces 320 and to the ECU 302 via interface 330. While two radar front ends 306, 308, are shown in FIG. 3, this number is for clarity purposes and may be scalable to a larger quantity. In some embodiments, the radar front ends 306, 308 are located at various positions around an automobile housing vehicular control system 300. For example, one radar front end 306 is positioned at the front end of the automobile and the other radar front end 308 is positioned at the rear end of the automobile. In some embodiments, the radar front end 306 includes a plurality of antennas 316, 318. For example, the plurality of antennas 316 are transmission antennas and the plurality of antennas 318 are reception antennas. Similarly, in some embodiments for radar front end 308, the plurality of antennas 326 are transmission antennas and the plurality of antennas 328 are reception antennas. In some embodiments, the plurality of antennas associated with each of radar front ends 306, 308 support MIMO radar configurations. While two antennas are shown for each of the plurality of antennas 316, 318, 326, 328, this number is for clarity purposes and may be scalable to other quantities (e.g., three, four, or more antennas).

In some embodiments, the radar MCPU 304 is implemented as a microcontroller unit (MCU) or other processing unit that is configured to execute radar signal processing tasks such as, but not limited to, object identification, computation of object distance, object velocity, and object angular direction (collectively referred to as "radar information"). In some embodiments, the radar MCPU 304 is additionally configured to generate control signals based on the radar information. The radar MCPU 304 is, for example, configured to generate calibration signals, receive data signals, receive sensor signals, generate frequency spectrum shaping signals, and/or state machine signals for radio frequency (RF) circuit enablement sequences. In addition, in some embodiments, the radar MCPU 304 is configured to program the radar front ends 306, 308 to operate in a coordinated fashion by transmitting MIMO waveforms for use in constructing a virtual aperture from a combination of the distributed apertures formed by the plurality of transmission and reception antennas shown in FIG. 3.

The radar front ends 306, 308, in some embodiments, include radar front end chip circuitry that is coupled to the respective pluralities of antennas to transmit radar signals (e.g., in the form of radar chirp sequences), to receive reflected radar signals, and to digitize these received radar signals for forwarding to the radar MCPU 304 over interface 320. In some embodiments, the radar MCPU 304 performs radar processing tasks based on the digitized radar signals received from the radar front ends 306, 308 to provide radar information to the ECU 302. The ECU 302 uses this radar information to control one or more actuators 310 such as a steering actuator, braking actuator, or throttle actuator to assist in driver-assistance or autonomous driving functions. In some embodiments, the ECU 302 displays the radar information or associated information via a user interface 312 such as a screen display, a speaker, or a light (e.g., in a side mirror or on a dashboard) to alert the driver of nearby objects.

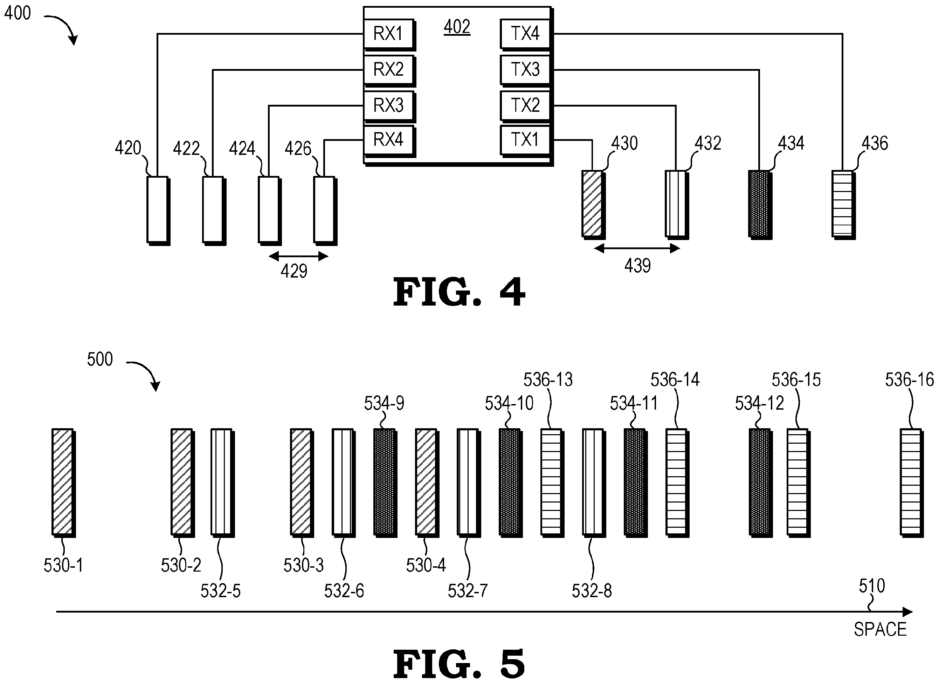

FIG. 4 shows an example of a MIMO antenna array configuration 400 in accordance with some embodiments. The MIMO antenna array configuration includes a plurality of antennas coupled to a radar sensor chip 402 which may correspond to one of the radar front ends 306, 308 of FIG. 3.

In the illustrated embodiment, the MIMO antenna array configuration 400 includes four reception (RX) antennas 420, 422, 424, 426 and four transmission (TX) antennas 430, 432, 434, 436 that are arranged in a linear array. In other embodiments, the MIMO antenna array configuration 400 may include another number of RX antennas and/or TX antennas or another array shape (e.g., a non-linear array). The RX antennas includes a first RX antenna (RX1) 420, a second RX antenna (RX2) 422, a third RX antenna (RX3) 424, and a fourth RX antenna (RX4) 426 that are spaced apart by a first distance 429 (only one first distance 429 is labeled between the RX3 424 and the RX4 426 for clarity purposes). In some embodiments, the first distance 429 is 1.5λ, where λ is the wavelength of the radio signal transmitted by the MIMO antenna array configuration 400. The TX antennas includes a first TX antenna (TX1) 430, a second TX antenna (TX2) 432, a third TX antenna (TX3) 434, and a fourth TX antenna (TX4) 436 that are spaced apart by a second distance 439 (only one second distance 439 is labeled between the TX1 430 and the TX2 432 for clarity purposes). In some embodiments, the second distance is 2.0λ, where λ is the wavelength of the radio signal transmitted by the MIMO antenna array configuration 400.

Each one of the TX antennas 430, 432, 434, 436 of the MIMO antenna array configuration 400 is configured to transmit a radar signal, and each one of the RX antennas 420, 422, 424, 426 is configured to receive echoes of the radar signals transmitted from the TX antennas 430, 432, 434, 436 after the signals reflect off of one or more objects in the surrounding environment. For example, the RX1 420 is configured to receive a first echo corresponding to the radar signal transmitted from the TX1 430, a second echo corresponding to the radar signal transmitted from the TX2 432, a third echo corresponding to the radar signal transmitted from the TX3 434, and a fourth echo corresponding to the radar signal transmitted from the TX4 436. Similarly, the RX2 422 is configured to receive a first echo corresponding to the radar signal transmitted from the TX1 430, a second echo corresponding to the radar signal transmitted from the TX2 432, a third echo corresponding to the radar signal transmitted from the TX3 434, and a fourth echo corresponding to the radar signal transmitted from the TX4 436; the RX3 424 is configured to receive a first echo corresponding to the radar signal transmitted from the TX1 430, a second echo corresponding to the radar signal transmitted from the TX2 432, a third echo corresponding to the radar signal transmitted from the TX3 434, and a fourth echo corresponding to the radar signal transmitted from the TX4 436; and the RX4 426 is configured to receive a first echo corresponding to the radar signal transmitted from the TX1 430, a second echo corresponding to the radar signal transmitted from the TX2 432, a third echo corresponding to the radar signal transmitted from the TX3 434, and a fourth echo corresponding to the radar signal transmitted from the TX4 436. The collection of the received echoes, including their corresponding voltages, is processed according to the various processing blocks described in the radar processor 142 of FIG. 2 to generate the range-Doppler detection cell 158 data. The object determination block 160 then generates a complex beam vector based on the range-Doppler detection cell 158 data. An example of the generated complex beam vector is shown in FIG. 5.

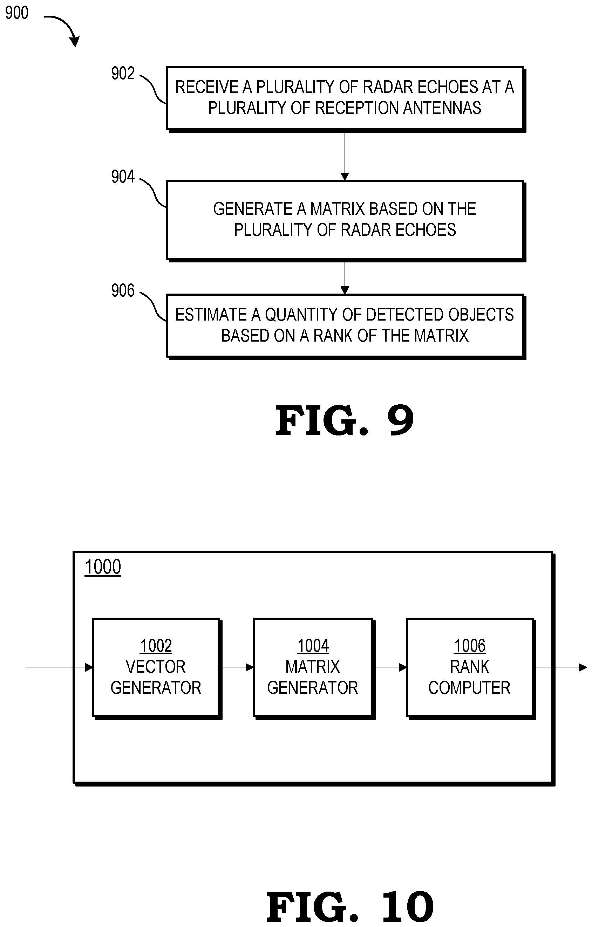

FIG. 5 shows an example diagram illustrating a complex beam vector 500 that is generated by a radar processor (e.g., the radar processor 142 of FIG. 2 or the radar processor 1000 of FIG. 10) from the range-Doppler detection cell data (such as the range-Doppler detection cell data 158 of FIG. 2) based on echoes received at the MIMO antenna array configuration 400 of FIG. 4 in accordance with various embodiments. That is, in some embodiments, the object determination block 160 in the radar processor 142 of FIG. 2 generates the complex beam vector 500 based on the range-Doppler cell data 158 and utilizes the complex beam vector 500 to generate the detected object vector 162 that is input to the AoA estimation component 164. In FIG. 5, the space domain 510 of the virtual RX array realized by the MIMO antenna array configuration 400 is denoted along the horizontal direction.

In the illustrated embodiment, the complex beam vector 500 includes 16 elements (four elements each in subarrays 530, 532, 534, 536), where each element corresponds to an echo of a transmitted radar signal that is received at one of the RX antennas 420, 422, 424, 426. That is, each element of the complex beam vector 500 represents a virtual RX antenna of a virtual RX antenna array that is formed from the collection of echoes received at the RX antennas 420, 422, 424, 426 based on the signals transmitted from the TX antennas 430, 432, 434, 436 for the MIMO antenna array configuration 400 of FIG. 4. As such, in some embodiments, each respective subset represents a virtual RX antenna subarray associated with a receive antenna (e.g., the subset 530 represents a virtual RX antenna subarray associated with the receive antenna RX1 420). For example, in the illustrated embodiments, the RX1 420 receives echoes corresponding to the elements 530-1, 530-2, 530-3, 530-4 in the space domain 510, the RX2 422 receives echoes corresponding to the elements 532-5, 532-6, 532-7, 532-8 in the space domain 510, the RX3 424 receives echoes corresponding to the elements 534-9, 534-10, 534-11, 534-12 in the space domain 510, and the RX4 426 receives echoes corresponding to the elements 536-13, 536-14, 536-15, 536-16 in the space domain 510. As illustrated, based on the spacing and pattern of the MIMO antenna array configuration 400 of FIG. 4, the received complex beam vector 500 includes elements that are interleaved with one another with respect to the RX antennas at which they are received. In some embodiments, a radar processor (e.g., the radar processor 142 of FIG. 2 or the radar processor 1000 of FIG. 10) is configured to apply a permutation function, P, to the complex beam vector 500 to generate a (non-complex) beam vector that groups the complex elements based on the RX antenna.

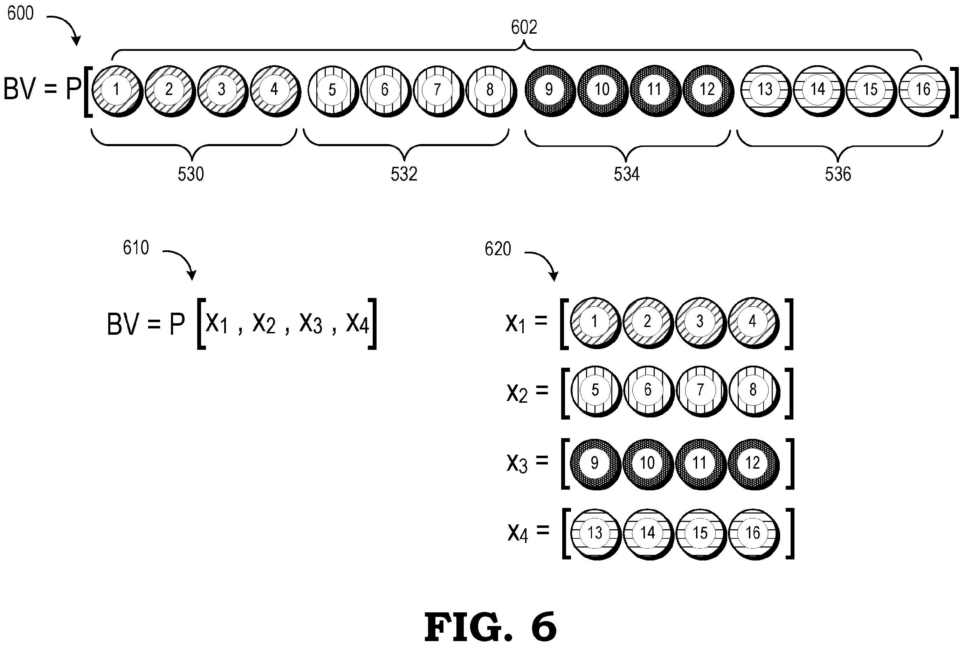

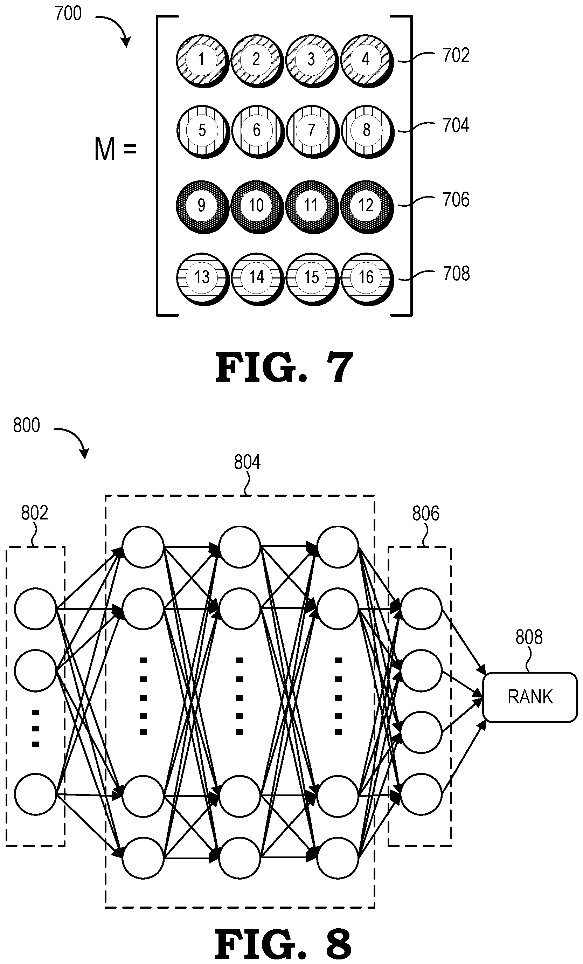

FIG. 6 shows diagrams 600, 610, 620 of a beam vector corresponding to the complex beam vector 500 shown in FIG. 5 in accordance with various embodiments. The beam vector illustrated in diagrams 600, 610, 620 of FIG. 6 includes the same elements of the complex beam vector 500 albeit in a modified order in which the elements are grouped according to the RX antenna. In some embodiments, a radar processor (e.g., radar processor 142 of FIG. 2 or the radar processor 1000 of FIG. 10) is configured to generate the beam vector illustrated in diagrams 600, 610, 620 and then generate a matrix (shown in FIG. 7) to estimate the number of objects.

Referring to diagram 600, based the complex beam vector 500 of FIG. 5 corresponding to the echoes received at each of the RX antennas, the radar processor is configured to generate the beam vector 602 which categorizes the elements of the complex beam vector 500 into multiple vectors (or subarrays) corresponding to the physical receive channels of a particular RX antenna. In some embodiments, the radar processor applies a permutation function, P, to the complex beam vector 500 to generate the beam vector 602. For example, with the beam vector 602, the first subarray 530 refers to 530-1, 530-2, 530-3, 530-4 of FIG. 5 and corresponds to the echoes received at the RX1 420, the second subarray 532 refers to 532-5, 532-6, 532-7, 532-8 of FIG. 5 and corresponds to the echoes received at the RX2 422, the third subarray 534 refers to 534-9, 534-10, 534-11, 534-12 of FIG. 5 and corresponds to the echoes received at the RX3 424, the fourth subarray 536 refers to 536-13, 536-14, 536-15, 536-16 of FIG. 5 and corresponds to the echoes received at the RX4 426. Diagram 610 shows a simplified form of the beam vector 602 of diagram 600 with the first subarray 530 in beam vector 602 being represented by subarray x₁, the second subarray 532 being represented by subarray x₂, the third subarray 534 being represented by subarray x₃, and the fourth subarray 536 being represented by subarray x₄. Furthermore, diagram 620 illustrates the elements in each of subarrays x₁, x₂, x₃, and x₄. For example, subarray x₁ includes the four elements (elements 1-4) from the first subarray 530 in diagram 600, subarray x₂ includes the four elements (elements 5-8) from the second subarray 532 in diagram 600, subarray x₃ includes the four elements (elements 9-12) from the third subarray 534 in diagram 600, and subarray x₄ includes the four elements (elements 13-16) from the fourth subarray 536 in diagram 600.

FIG. 7 shows an example of a matrix, M, 700 generated by a radar processor (e.g. radar processor 142 of FIG. 1 or radar processor 1000 of FIG. 10) based on the beam vector of FIG. 6 in accordance with some embodiments. Each element of the matrix 700 corresponds to a virtual RX antenna of a virtual RX antenna array formed by the MIMO antenna array configuration 400 of FIG. 4. Furthermore, in the illustrated embodiment, each row 702, 704, 706, 708 of the matrix corresponds to one of the subarrays x₁, x₂, x₃, and x₄, respectively, of FIG. 6. In other words, each row 702, 704, 706, 708 represents the echoes received at one RX antenna of the multiple RX antennas of the MIMO antenna array configuration 400 of FIG. 4. For example, row 702 represents the echoes received at the RX1 420 (e.g., row 702 includes elements corresponding to subarray x₁ in diagram 620 and first subarray 530 in diagram 600), row 704 represents the echoes received at the RX2 422 (e.g., row 704 includes elements corresponding to subarray x₂ in diagram 620 and second subarray 532 in diagram 600), row 706 represents the echoes received at the RX3 424 (e.g., row 706 includes elements corresponding to subarray x₃ in diagram 620 and third subarray 534 in diagram 600), and row 708 represents the echoes received at the RX4 426 (e.g., row 708 includes elements corresponding to subarray x₄ in diagram 620 and fourth subarray 536 in diagram 600).

In some embodiments, the radar processor (e.g., radar processor 142 of FIG. 1 or radar processor 1000 of FIG. 10) is configured to compute the rank of the matrix 700 and estimate the number of objects based on the computed rank. For example, in a single object scenario, the rows 702, 704, 706, 708 will have a relatively high correlation. Thus, the rank of the corresponding matrix 700 will be one, indicating the single object. In another example, in a two object scenario, there will be two directions of arrival (θ₁ and θ₂) for the echoes. In this scenario, the rows 702, 704, 706, 708 will exhibit variations based on the two directions of arrival (θ₁ and θ₂), which will produce a matrix with two linearly independent columns resulting in a rank of two, thereby indicating the two objects. This method can be extended to other numbers of objects (e.g., three or more) and is limited only by the number of MIMO channels (transmit and receive) of the MIMO antenna array configuration in the radar system.

In some embodiments, the radar processor includes a neural network (NN) accelerator that employs a NN to calculate the rank of a matrix input to the NN. For example, the NN is configured to receive, at an input layer, values corresponding to the elements of the matrix 700 and generate an output corresponding to the rank of the matrix 700. In some embodiments, the NN is trained using data that is collected in an anechoic chamber. This data includes channel responses at various directions of arrival from a corner reflector or a radar target simulator. Additionally, in some embodiments, this data is augmented with Monte Carlo simulations of the relevant parameters (e.g., directions of arrival, coefficients associated with scattering objects such as other vehicles, or the like).

FIG. 8 shows an example of a neural network (NN) 800 employed by a NN accelerator in the radar processor (e.g. radar processor 142 of FIG. 1 or radar processor 1000 of FIG. 10) to compute the rank of a matrix such as the matrix 700 of FIG. 7 in accordance with some embodiments. The NN 800 includes an input layer 802 with a plurality of nodes. In some embodiments, the plurality of nodes in the input layer 802 corresponds to the elements of the generated matrix (e.g., elements in the matrix 700 of FIG. 7). The NN 800 also includes one or more hidden layers 804. In the illustrated embodiments, three hidden layers 804 are shown. In other embodiments, the NN 800 includes other numbers of hidden layers (e.g., two layers, four layers or more). Each of the one or more hidden layers 804 includes a plurality of nodes (e.g., 32, 64, 128, 256, 512, 1024, or another number of nodes) which is configured to receive signals from previous nodes and apply an activation function to the received signal to generate an output that is then input to one or more nodes at the next layer of the NN 800. Thus, each output of each node (or "neuron") in the hidden layers 804 of the NN 800 is computed based on a non-linear function of the sum of its inputs and, in some cases, a weight value that can be adjusted as the training and learning of the NN 800 proceeds. The wight value increases or decreases the strength of the signal at the particular connection in the NN 800. Eventually, the signals propagated through the NN 800 reach an output layer 806 which gives the final result, in this case the rank 808 of the matrix, of the data processed by the NN 800. In some embodiments, the number of nodes in the output layer 806 corresponds to the number of objects that can be detected by the techniques described herein. In the illustrated embodiment, the output layer 806 includes four nodes. In other embodiments, other numbers of nodes are contemplated.

FIG. 9 shows an example of a flowchart 900 describing an object quantity estimation technique in accordance with some embodiments. The method shown in flowchart 900 is implemented by a radar system such as the one shown in FIGs. 1-3 or a radar processor such as the one shown in FIG. 10,

At 902, the method includes that radar system receiving a plurality of radar echoes at a plurality of reception antennas. The plurality of radar echoes correspond to radar signals transmitted by multiple transmission antennas of the radar system. For example, in some embodiments, the plurality of reception antennas correspond to the RX1 430, the RX2 432, the RX3 434, and the RX4 436 of FIG. 4. At 904, the method includes a radar processor generating a matrix based on the plurality of radar echoes. For example, in some embodiments, the radar processor corresponds to radar processor 142 of FIG. 1 or radar processor 1000 of FIG. 10, and the matrix corresponds to the matrix, M, 700 of FIG. 7. At 906, the method includes the radar processor estimating the number of objects based on a rank of the matrix. This number of objects is then used to identify the range-Doppler cells that are to be subjected to additional radar processing, e.g., identifying which range-Doppler cells are selected for Angle of Arrival (AOA) estimation. And, by utilizing the object quantity estimation techniques described herein, the radar system is able to selectively pick the range-Doppler cells independent of performing antenna array calibration as required by conventional techniques.

FIG. 10 shows an example of a radar processor 1000 to perform the object quantity estimation techniques in accordance with some embodiments. The radar processor 1000, in some embodiments, corresponds to the radar processor 142 of FIG. 2, and has multiple components including a vector generator 1002, a matrix generator 1004, and a rank computer 1006. In some embodiments, one or more of the components of the radar processor 1000 are implemented via hardware, software, or a combination thereof. For example, in some embodiments, one or more of the components are implemented via a NN accelerator.

The vector generator 1002 is configured to generate one or more vectors based on an input corresponding to a plurality of echoes received at multiple RX antennas (not picture) coupled to the radar processor 1000. For example, in some embodiments, the vector generator 1002 first generates a complex beam vector such as one corresponding to complex beam vector 500 of FIG. 5 and then applies a permutation function to the complex beam vector to generate a beam vector such as one corresponding to the beam vectors shown in FIG. 6. The matrix generator 1004 is configured to generate a matrix based on the output of the vector generator 1002. For example, in some embodiments, the matrix generator 1004 generates an output corresponding to matrix, M, 700 of FIG. 7. The rank computer 1006 is configured to compute the rank of the matrix output by matrix generator 1004. For example, in some embodiments, the rank computer 10006 employs a NN such as the one shown in FIG. 8 to compute the rank of the matrix output by matrix generator 1004.

In a first embodiment, a method includes receiving a plurality of radar echoes at a plurality of reception antennas of a radar system. The method also includes generating, by a processor of the radar system, a matrix, where each row of the matrix is associated with a subset of the plurality of radar echoes received at one reception antenna of the plurality of reception antennas. The method further includes estimating, by the processor, a number of detected objects based on a rank of the matrix.

In some aspects of the first embodiment, the method includes performing, by the processor, an angle of arrival estimation based on the number of detected objects.

In some aspects of the first embodiment, each reception antenna of the plurality of reception antennas receives multiple radar echoes, and each radar echo of the multiple radar echoes is associated with a transmit radar signal transmitted from one transmission antenna of a plurality of transmission antennas of the radar system.

In some aspects of the first embodiment, the method includes generating a beam vector based on the plurality of radar echoes and generating the matrix based on the beam vector.

In some aspects of the first embodiment, the beam vector includes a plurality of elements, and each element of the plurality of elements corresponds to one of the plurality of radar echoes received at one reception antenna of the plurality of reception antennas.

In some aspects of the first embodiment, wherein in the beam vector, at least one subset of elements associated with one reception antenna of the plurality of reception antennas is interleaved with at least one other subset of elements associated with at least one other reception antenna of the plurality of reception antennas.

In some aspects of the first embodiment, generating the matrix is based on the processor applying a permutation function to the beam vector, and wherein the permutation function is based on the interleaved elements.

In some aspects of the first embodiment, estimating the number of objects based on the rank of the matrix includes utilizing a neural network. In some aspects, an input to the neural network includes elements of the matrix. In some aspects, an output of the neural network indicates the rank of the matrix.

In a second embodiment, a processor is configured to generate a matrix based on a plurality of radar echoes received at a plurality of reception antennas of a radar system including the processor, wherein each row of the matrix is associated with a subset of the plurality of radar echoes received at one reception antenna of the plurality of reception antennas. The processor is also configured to employ a neural network to estimate a number of objects based on a rank of the matrix, wherein an input to the neural network includes elements of the matrix and an output of the neural network indicates the rank of the matrix.

In some aspects of the second embodiment, the processor is configured to perform an angle of arrival estimation based on the number of detected objects.

In some aspects of the second embodiment, each reception antenna of the plurality of reception antennas receives multiple radar echoes, and each radar echo of the multiple radar echoes is associated with a transmit radar signal transmitted from one transmission antenna of a plurality of transmission antennas of the radar system.

In some aspects of the second embodiment, the processor is configured to generate a beam vector based on the plurality of radar echoes and generate the matrix based on the beam vector.

In some aspects of the second embodiment, the beam vector includes a plurality of elements, each element of the plurality of elements corresponding to one of the plurality of radar echoes received at one reception antenna of the plurality of reception antennas.

In some aspects of the second embodiment, in the beam vector, at least one subset of elements associated with one reception antenna of the plurality of reception antennas is interleaved with at least one other subset of elements associated with at least one other reception antenna of the plurality of reception antennas.

In some aspects of the second embodiment, generating the matrix is based on the processor applying a permutation function to the beam vector, and wherein the permutation function is based on the interleaved elements.

In a third embodiment, a radar system includes a plurality of reception antennas to receive a plurality of radar echoes and a processor coupled to the plurality of reception antennas. The processor is configured to generate a matrix based on a plurality of radar echoes received at a plurality of reception antennas of a radar system including the processor, wherein each row of the matrix is associated with a subset of the plurality of radar echoes received at one reception antenna of the plurality of reception antennas and estimate a number of objects of the radar system based on a rank of the matrix.

In some aspects of the third embodiment, the processor is configured to employ a neural network to estimate the number of objects based on the rank of the matrix.

In some aspects of the third embodiment, an input to the neural network includes elements of the matrix and an output of the neural network indicates the rank of the matrix.

In some embodiments, certain aspects of the techniques described above may be implemented by one or more processors of a processing system executing software. The software includes one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disk, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed is not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A method comprising:
receiving a plurality of radar echoes at a plurality of reception antennas of a radar system;
generating, by a processor of the radar system, a matrix, wherein each row of the matrix is associated with a subset of the plurality of radar echoes received at one reception antenna of the plurality of reception antennas; and
estimating, by the processor, a number of detected objects based on a rank of the matrix.

2. The method of claim 1, further comprising: performing, by the processor, an angle of arrival estimation based on the number of detected objects.

3. The method of claim 1 or 2, wherein each reception antenna of the plurality of reception antennas receives multiple radar echoes, wherein each radar echo of the multiple radar echoes is associated with a transmit radar signal transmitted from one transmission antenna of a plurality of transmission antennas of the radar system.

4. The method of any of claims 1 to 3, further comprising: generating a beam vector based on the plurality of radar echoes; and generating the matrix based on the beam vector.

5. The method of claim 4, wherein the beam vector includes a plurality of elements, each element of the plurality of elements corresponding to one of the plurality of radar echoes received at one reception antenna of the plurality of reception antennas.

6. The method of claim 5, wherein in the beam vector, at least one subset of elements associated with one reception antenna of the plurality of reception antennas is interleaved with at least one other subset of elements associated with at least one other reception antenna of the plurality of reception antennas.

7. The method of claim 6, wherein generating the matrix is based on the processor applying a permutation function to the beam vector, and wherein the permutation function is based on the interleaved elements.

8. A processor configured to:
generate a matrix based on a plurality of radar echoes received at a plurality of reception antennas of a radar system comprising the processor, wherein each row of the matrix is associated with a subset of the plurality of radar echoes received at one reception antenna of the plurality of reception antennas; and
employ a neural network to estimate a number of objects based on a rank of the matrix, wherein an input to the neural network comprises elements of the matrix and an output of the neural network indicates the rank of the matrix.

9. The processor of claim 8, wherein the processor is configured to: perform an angle of arrival estimation based on the number of detected objects.

10. The processor of claim 8 or 9, wherein each reception antenna of the plurality of reception antennas receives multiple radar echoes, wherein each radar echo of the multiple radar echoes is associated with a transmit radar signal transmitted from one transmission antenna of a plurality of transmission antennas of the radar system.

11. The processor of any of claims 8 to 10, wherein the processor is configured to:
generate a beam vector based on the plurality of radar echoes; and generate the matrix based on the beam vector.

12. The processor of claim 11, wherein the beam vector includes a plurality of elements, each element of the plurality of elements corresponding to one of the plurality of radar echoes received at one reception antenna of the plurality of reception antennas.

13. The processor of claim 12, wherein in the beam vector, at least one subset of elements associated with one reception antenna of the plurality of reception antennas is interleaved with at least one other subset of elements associated with at least one other reception antenna of the plurality of reception antennas.

14. The processor of claim 13, wherein generating the matrix is based on the processor applying a permutation function to the beam vector, and wherein the permutation function is based on the interleaved elements.

15. A radar system comprising: a plurality of reception antennas to receive a plurality of radar echoes; and a processor coupled to the plurality of reception antennas, the processor being configured to:
generate a matrix based on a plurality of radar echoes received at a plurality of reception antennas of a radar system comprising the processor, wherein each row of the matrix is associated with a subset of the plurality of radar echoes received at one reception antenna of the plurality of reception antennas; and
estimate a number of objects of the radar system based on a rank of the matrix.
